# FASCICULE DE BREVET EUROPEEN

(11) **EP 0 709 124 B1**
(45) Date de publication et mention de la délivrance du brevet: **06.09.2000**
(21) Numéro de dépôt: 95402317.2
(22) Date de dépôt: 17.10.1995
(51) Int. Cl.: B01D 53/26

(54) **Procédé de séchage d'un gaz mettant en oeuvre la distillation d'un agent desséchant liquide**
Verfahren zur Trocknung eines Gases mittels Destillation eines flüssigen Trocknungsmittels
Process for drying a gas with distillation of a liquid drying agent

(30) Priorité: 24.10.1994 FR 9412687
(43) Date de publication de la demande: 01.05.1996
(73) Titulaire: TECHNIP, 92400 Courbevoie (FR)
(72) Inventeur: Paradowski, Henri, F-95000 Cergy (FR)
(74) Mandataire: Durand, Yves Armand Louis

(56) Documents cités:
- EP-A- 0 362 023
- US-A- 3 925 047

## Description

L'objet du présent procédé est de permettre un traitement simple et économique d'un gaz, de préférence un gaz sous haute pression, contenant des quantités significatives d'eau afin de produire :
- un gaz sec, dont la teneur en eau est inférieure par exemple à 10 ppm mole et qui peut donc être refroidi à basse température sans que l'on puisse craindre de formation d'hydrates ou de glace ; la teneur en eau à atteindre pour le gaz sec est choisie en fonction des températures à atteindre, dans le traitement ou les emplois ultérieurs dudit gaz ;
- de l'eau qui peut être évacuée vers un traitement biologique ou rejetée directement et dont la teneur en contaminants est faible.

Ce procédé se compare favorablement aux techniques connues et utilisées actuellement que sont :
- le séchage par adsorption de l'eau sur un desséchant solide tel que les tamis moléculaires, le gel de silice ou l'alumine activée,
- le séchage par absorption de l'eau dans un desséchant liquide, dont la volatilité est faible à température ambiante tel que le TEG (triéthylène glycol). Il permet d'obtenir des teneurs en eau des gaz traités beaucoup plus faibles que celles obtenues dans les procédés par réfrigération et utilisation d'un solvant qui inhibe la formation de glace et d'hydrates, en solubilisant l'eau et en réduisant de ce fait sa fugacité.

On connaît par exemple (US-A- 4 775 395) un procédé de séchage de gaz dans lequel (a) le gaz est mis en contact avec une phase liquide formée d'eau et d'un solvant soluble dans l'eau tel que le méthanol, l'éthanol, la pyridine ou la pipéridine, (b) on décharge une phase aqueuse liquide, (c) on recueille le gaz qui entraîne des vapeurs de solvant et d'eau, (d) on refroidit le gaz pour condenser le solvant et l'eau et (e) on recueille le gaz séparé du solvant et de l'eau condensés et on renvoie ces derniers à l'étape (a). Le solvant peut être plus volatil ou moins volatil que l'eau et l'emploi de solvants formant des azéotropes avec l'eau est recommandé. Un appoint de solvant aqueux est effectué dans le gaz recueilli à l'étape (c) avant refroidissement et condensation à l'étape (d). Cet appoint est destiné à compenser les pertes de solvant par entraînement de sa vapeur dans le gaz recueilli à l'étape (e) et dans la phase aqueuse déchargée à l'étape (b). Malgré l'emploi de températures très basses lors dudit refroidissement, la teneur en eau du gaz recueilli à l'étape (e) demeure élevée.

Par ailleurs, le document US-A-3925047 révèle un procédé de réduction de la teneur en humidité d'un gaz humide consistant à mettre celui-ci en contact avec un agent liquide desséchant-antigel, de manière à éliminer au moins une partie de l'humidité dans le gaz et à introduire une quantité suffisante dudit agent en phase vapeur dans ledit gaz pour empêcher la formation de solides au cours d'opérations subséquentes à basse température. Le préambule de la revendication 1 est basé sur ce document.

Le procédé de l'invention est défini dans la partie caractérisante de la revendication 1. D'autres particularités de l'invention ressortent des sous-revendications.

Le solvant organique du courant liquide d'appoint qui agit comme desséchant peut être, par exemple, du méthanol, de l'acétone, un mélange de méthanol et d'acétone entre autres, mais le méthanol est préféré pour le procédé. La teneur en eau de ce liquide d'appoint peut varier entre de très larges limites ; on peut par exemple utiliser pour le liquide d'appoint un mélange, en moles, de 0,01 à 90 parties d'eau pour 99,99 à 10 parties de solvant (calculé anhydre). Des mélanges de 10 à 70 parties d'eau pour 90 à 30 parties de méthanol, en moles, constituent un exemple pratique. Il est ainsi possible d'utiliser du méthanol dilué dans l'eau, moins coûteux que le méthanol parfaitement anhydre. Le méthanol disponible industriellement a une teneur en eau habituellement d'environ 0,2% mole. Les solutions aqueuses de méthanol provenant de la récupération de méthanol par lavage à l'eau de coupes d'hydrocarbures ont des teneurs en eau comprises entre 50 et 80% mole.

La composition de la phase condensée renvoyée à l'étape (a) est celle qui résulte des conditions opératoires. De manière générale, il s'agit d'un courant du même solvant organique que celui introduit dans le courant d'appoint, mais sa teneur en eau est plus faible que celle du courant d'appoint. Cette teneur en eau conditionne, dans une certaine mesure, la teneur en eau du gaz séché. Elle se situe, par exemple, entre 20 et 10 000 ppm en mole et de préférence, entre 50 et 2000 ppm en mole. Elle est conditionnée, entre autres, par l'efficacité de la zone de contact et de distillation fractionnée. Celle-ci renfermera avantageusement au moins 2 (de préférence au moins 5) plateaux théoriques dans sa portion inférieure (au-dessous de la zone d'appoint en desséchant) et au moins 2 (de préférence au moins 5) plateaux théoriques dans sa portion supérieure (au-dessus de ladite zone d'appoint).

Le courant aqueux d'appoint a, entre autres, pour utilité de compenser les pertes de solvant organique, notamment celles résultant de l'entraînement de vapeurs dudit solvant dans le gaz séché obtenu et de l'entraînement de solvant dans le courant de liquide déchargé à l'étape (b), ledit courant étant constitué essentiellement d'eau et de traces de solvant. La quantité de courant aqueux d'appoint sera donc au minimum celle nécessaire à compenser lesdites pertes du solvant organique. La perte de méthanol vaporisé dans le gaz séché sera d'autant plus faible que la température de condensation à l'étape (d) aura été choisie plus basse. Les exemples qui suivent donnent des valeurs pour différentes températures de condensation.

La température et la pression lors de la mise en contact de l'étape (a) seront choisies de telle manière que les zones de contact puissent fonctionner comme des zones de distillation fractionnée permettant de recueillir en tête un effluent vapeur riche en solvant organique et en fond un effluent liquide riche en eau.

Dans une forme de réalisation préférée, on opère dans une zone de distillation allongée, verticale, le courant de gaz étant admis dans la partie inférieure de ladite zone et traversant dans le sens ascendant une zone de contact alimentée en tête par la phase condensée liquide et de façon intermédiaire d'un courant d'appoint liquide.

Pour obtenir des débits élevés de traitement et éviter l'emploi de températures excessivement basses lors de la condensation de l'étape (d), on opérera avantageusement sous pression superatmosphérique, par exemple, une pression de 2 à 50 bars abs ou davantage. Dans les zones de contact et à leur base, la température sera supérieure à celle qui entraînerait la formation de glace ou d'hydrates solides.

Le refroidissement et la condensation de l'étape (d) peuvent mettre en oeuvre une zone de réfrigération suivie d'un ballon de séparation entre gaz et condensat. On peut également utiliser un déphlegmateur qui réalise économiquement les deux fonctions.

Dans une forme de réalisation particulière, dans le but de réduire encore la quantité de solvant organique desséchant entraîné par le gaz séché obtenu, on peut refroidir davantage ledit gaz séché obtenu à l'étape (d) pour produire un courant diphasique qui est ensuite séparé pour produire du gaz épuré sec et un courant de solvant desséchant liquide récupéré qui peut être recyclé dans le procédé par exemple par renvoi à l'étape (a) dans le courant de phase liquide condensée. Non seulement on abaisse la teneur en solvant entraîné dans le gaz mais on peut réduire encore la teneur en eau dudit gaz.

A titre de variante, l'épuration par refroidissement complémentaire énoncée ci-dessus peut être mise en oeuvre dans un déphlegmateur.

Les gaz qui peuvent être séchés par le présent procédé peuvent être de nature très variable. Il est seulement préférable qu'ils ne réagissent pas avec le solvant organique et l'eau et ne se dissolvent pas en quantité excessive dans l'eau. A titre d'exemples, on peut citer l'azote, l'hydrogène et les hydrocarbures gazeux ou vaporisés, par exemple en C1 à C6, pourvu qu'ils soient plus volatils que l'eau dans les conditions opératoires et ne forment pas d'azéotrope avec elle.

Par gaz humide, on entend un gaz qui renferme des quantités significatives d'eau à l'état de vapeur, allant par exemple de 5 ppm en mole jusqu'à la saturation, laquelle dépend de la température et de la pression.

L'invention sera mieux comprise et d'autres buts, caractéristiques, détails et avantages de celle-ci apparaîtront plus clairement au cours de la description explicative qui va suivre faite en référence aux dessins schématiques annexés, donnés uniquement à titre d'exemple illustrant plusieurs modes de réalisation de l'invention, et dans lesquels.

La figure 1 représente un mode de réalisation simplifié du procédé.

La figure 2 illustre un mode de réalisation comportant une étape de séchage et d'épuration complémentaire.

La figure 3 illustre le mode de réalisation de la figure 2 dans lequel le séchage et l'épuration complémentaires sont réalisés dans un déphlegmateur.

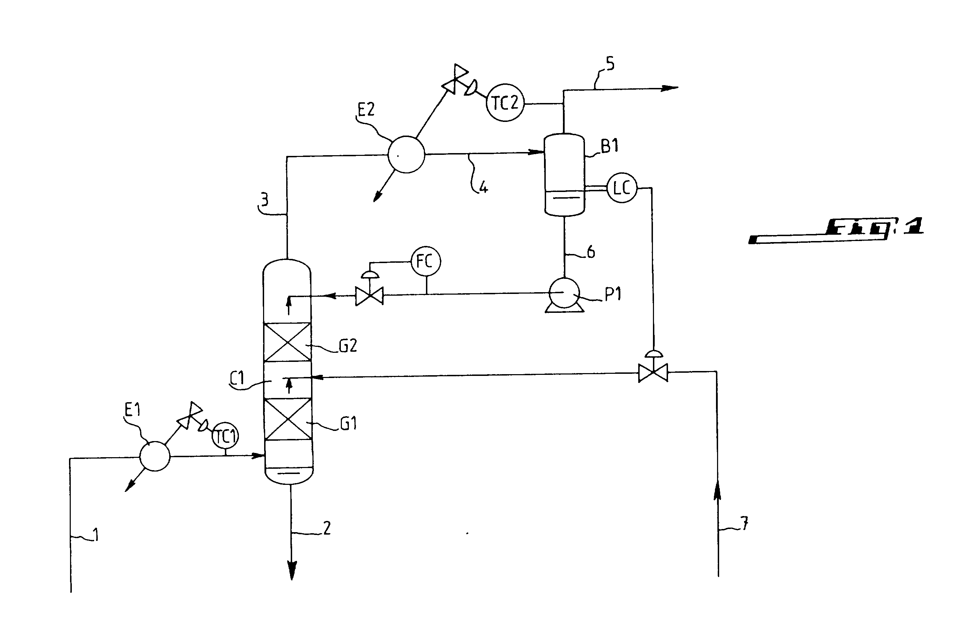

Comme on peut le voir en figure 1, le gaz humide parvient par la ligne (par ligne, on entend une canalisation) 1 à la colonne C1 en passant si nécessaire par un échangeur E1 qui en contrôle et règle la température par l'intermédiaire du contrôleur de température TC1. La colonne renferme des plateaux ou un garnissage. On a représenté deux garnissages G1 et G2.

L'effluent vapeur de tête (ligne 3) est refroidi dans l'échangeur E2 réglé en température par le contrôleur TC2. L'effluent maintenant diphasique est envoyé par la ligne 4 au ballon séparateur B1. Le gaz séché est évacué par la ligne 5.

Le condensat est renvoyé par la ligne 6 et la pompe P1 au sommet de la colonne C1. Son débit peut être contrôlé par le contrôleur FC. L'appoint de solvant organique est fourni par la ligne 7 qui débouche dans la colonne C1 en un point intermédiaire de telle sorte qu'un certain nombre d'étages de contact à contre courant soient prévus entre ce point intermédiaire et le point d'admission du courant de condensat de la ligne 6, d'une part, et entre ce point intermédiaire et le point d'admission du gaz humide de la ligne 1 d'autre part. Le débit de la ligne 7 peut être asservi au niveau de condensat dans B1 via le contrôleur LC.

En fond de colonne C1 on recueille de l'eau rejetée par la ligne 2 et qui peut renfermer des traces de solvant organique, de préférence moins de 100 ppm et encore mieux moins de 10 ppm mole.

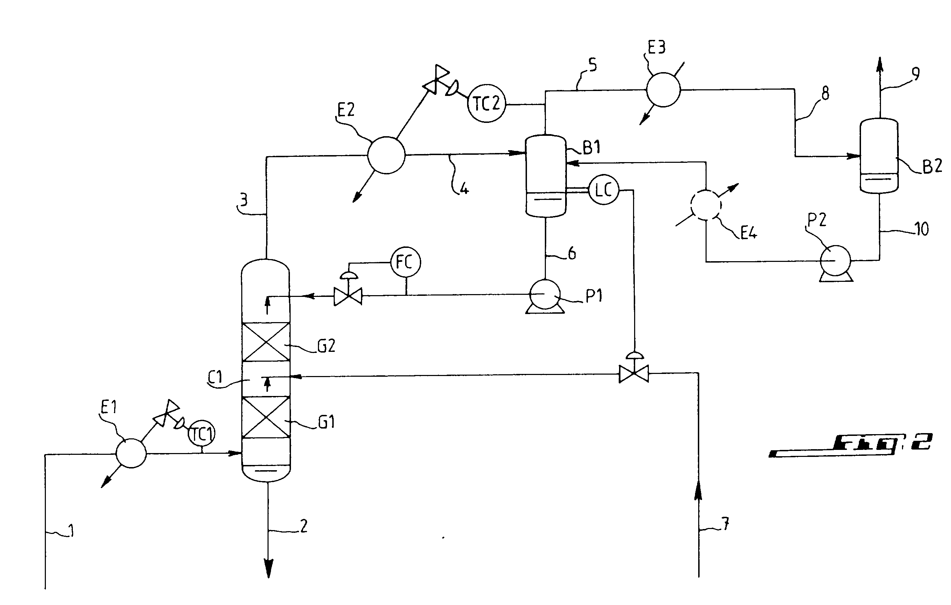

Dans le mode de réalisation illustré en figure 2, le gaz séché est refroidi davantage dans l'échangeur E3 et le condensat formé est envoyé par la ligne 8 au ballon décanteur B2. Le gaz épuré, dont la teneur en solvant organique et éventuellement la teneur en eau ont été abaissées, est recueilli par la ligne 9 tandis que la ligne 10 permet de renvoyer le condensat via la pompe P2 et l'échangeur E4 au ballon B1. Le contrôleur TC2 peut être asservi ici à la conduite 5.

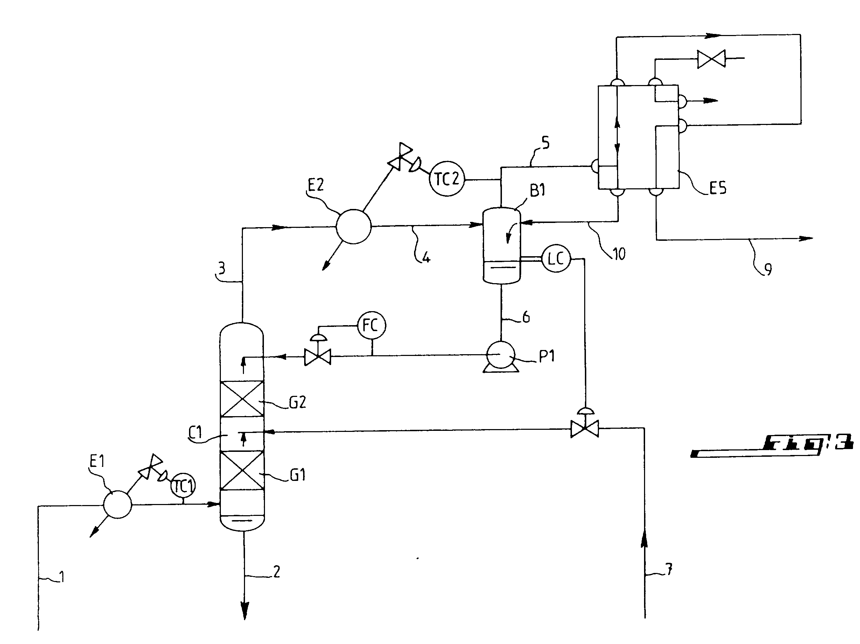

Dans le mode de réalisation illustré en figure 3, les échangeurs E3 et E4 et le ballon B2 sont remplacés par le déphlegmateur E5 dont le fonctionnement, de type classique, n'a pas besoin d'être décrit en détails.

Les exemples suivants, non limitatifs, illustrent l'invention.

### Exemple 1 - Séchage d'azote

Différents essais de séchage d'azote ont été réalisés en utilisant le méthanol comme solvant organique desséchant et qui ne forme pas d'azéotrope avec l'eau. L'azote est disponible sous 12,5 bars absolus à la température de 50°C, mais selon les cas, sa température est élevée ou abaissée dans l'échangeur E1 pour s'adapter aux températures de la colonne C1 indiquées dans le tableau 1. L'azote renferme 9298 ppm en mole d'eau et est fourni à raison de 1250 kmoles/h.

Le desséchant d'appoint (ligne 7) est un mélange 50%/50% en mole d'eau et de méthanol.

La colonne possède 20 étages théoriques dans la zone de séchage (G2) et 10 étages théoriques dans la zone d'épuisement (G1).

Les conditions expérimentales et les résultats de ces essais sont regroupés dans le tableau 1 dont il ressort que les performances du procédé s'améliorent lorsque la température de condensation baisse :
- la teneur en méthanol du gaz sec baisse et atteint environ 3000 ppm mole lorsque la température est de
- -5°C au ballon B1,
- le débit d'appoint de desséchant baisse dans les mêmes proportions,
- la chaleur échangée par l'échangeur E2 diminue,
- lorsque la température de B1 est inférieure à 20°C, il n'est plus nécessaire de chauffer le gaz dans l'échangeur E1,
- le débit de reflux de la colonne C1 (ligne 6) diminue.

Les conditions optimales sont obtenues pour une température de B1 aussi basse que possible, compte tenu du réfrigérant disponible. Des températures au dessous de -5°C peuvent être utilisées, par exemple jusqu'à -50°C, au ballon B1. La température du fond de colonne C1 doit cependant être supérieure à la température de formation de glace ou d'hydrates.

### Exemple 2 - Séchage d'éthane

On a opéré sensiblement comme dans le cas AZ1-1, décrit au tableau 1 sous une pression de 12,5 bars absolus, avec de l'éthane renfermant 9298 ppm en mole d'eau. On a observé une température de tête de 56°C et une température de fond de 78°C dans la colonne C1. L'éthane sec obtenu (ligne 5) avait une teneur en méthanol de 28059 ppm en mole et une teneur en eau de 1 ppm en mole.

Si l'on opère sous 25 bars, les teneurs en méthanol et en eau de l'éthane sec sont respectivement de 18098 ppm et 1 ppm en mole, ce qui indique qu'il est avantageux d'opérer sous pression élevée.

Si l'on utilise un desséchant d'appoint qui contient 40% en mole d'eau, au lieu de 50%, on constate qu'on peut obtenir la même composition pour l'éthane sec et cela avec une consommation d'énergie thermique réduite et des débits de reflux et d'appoint plus faibles.

### Exemple 3 - Séchage d'un mélange gazeux

5 essais de séchage d'un mélange gazeux, dont on a fait varier la teneur en hexane, ont été réalisés en utilisant le procédé dans sa version de base, telle que représentée sur la figure 1.

Le gaz à sécher est constitué d'un mélange de méthane et de n-hexane, disponible à une température de 50°C et une pression de 40 bars abs. Ce gaz contient 3045 ppm mole d'eau. Le desséchant utilisé est du méthanol.

Ce gaz est séché par distillation dans une installation où la colonne C1 est équipée de deux lits de garnissage. Le garnissage de séchage (G2) comporte 7 étages théoriques et celui d'élimination du desséchant (G1) 8 étages théoriques.

Différents cas regroupés au tableau 2, ont été étudiés pour des teneurs en hexane du mélange gazeux allant de 0,1 à 0,5% environ. La température de réfrigération dans l'échangeur E2 est de 10°C. Dans tous les cas, la teneur en eau du gaz sec est de 1 ppm mole et la teneur en méthanol de l'eau rejetée est de 1 ppm mole également.

Les résultats sont présentés également dans le tableau 2.

On constate qu'il faut un débit plus grand de desséchant lorsque la teneur en hexane du mélange gazeux augmente, car l'hexane, en se solubilisant dans le desséchant, réduit son efficacité.

### Exemple 4 - Séchage d'azote avec épuration complémentaire du gaz sec obtenu

Des essais de séchage d'azote ont été réalisés en utilisant le procédé dans une version améliorée, telle que représentée sur la figure 2 et en faisant varier le nombre d'étages théoriques du garnissage de séchage (G2) de la colonne C1. Le gaz à sécher est constitué d'azote disponible à 12,5 bars abs. et 50°C et saturé en eau. Le desséchant utilisé est du méthanol.

Ce gaz est séché par distillation dans une installation où la colonne C1 est équipée de deux lits de garnissage. Le garnissage de séchage (G2) comporte de 3 à 20 étages théoriques et celui d'élimination du desséchant (G1) 10 étages théoriques.

La température de réfrigération dans l'échangeur E2 est de 10°C. Dans tous les cas la teneur en méthanol de l'eau rejetée est de 1 ppm mole.

Les conditions expérimentales et les résultats de ces essais sont présentés dans le tableau 3. L'étape complémentaire d'épuration du gaz sec permet d'obtenir des améliorations significatives du procédé :
- la teneur en méthanol du gaz épuré est réduite de 7300 à 350 ppm mole,
- la teneur en eau du gaz épuré est plus faible que celle du gaz sec,
- la colonne de distillation nécessite moins d'étages théoriques de transfert.

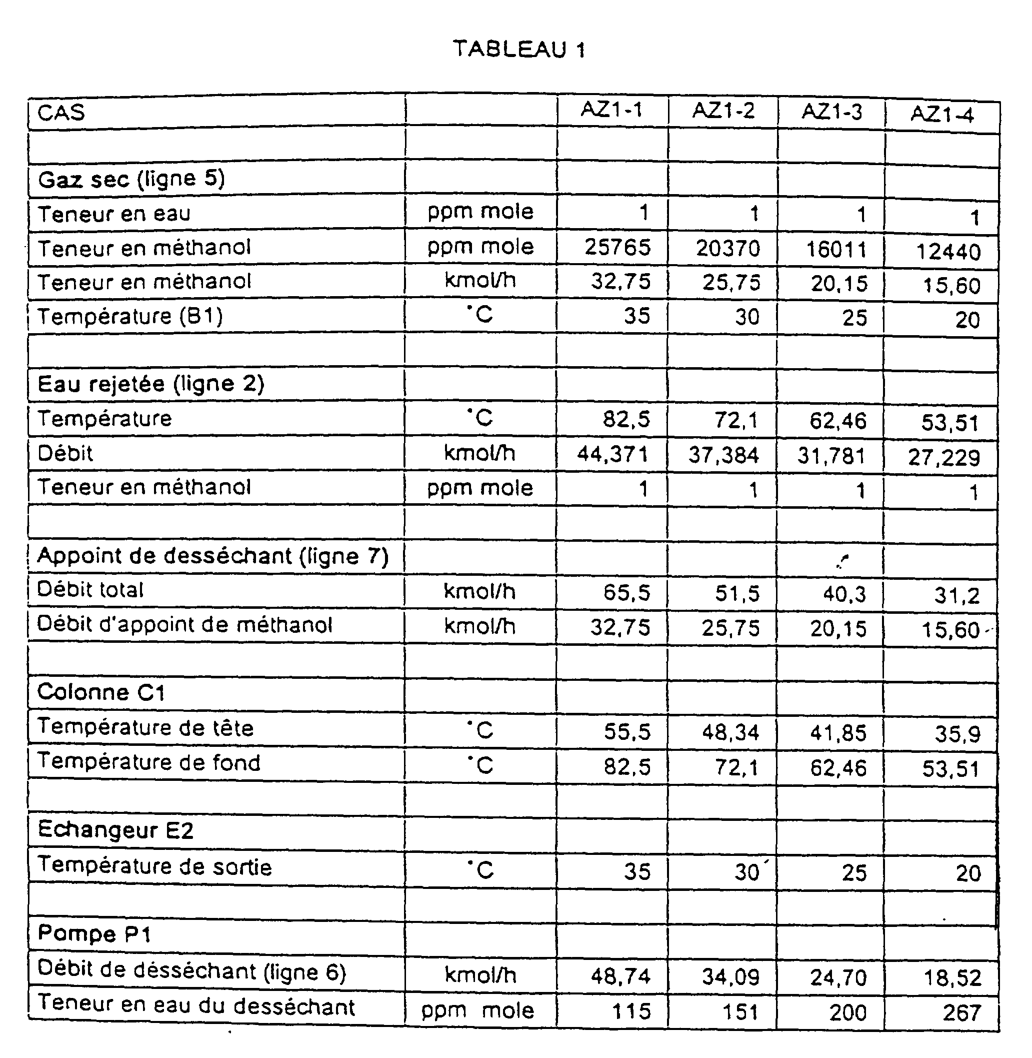

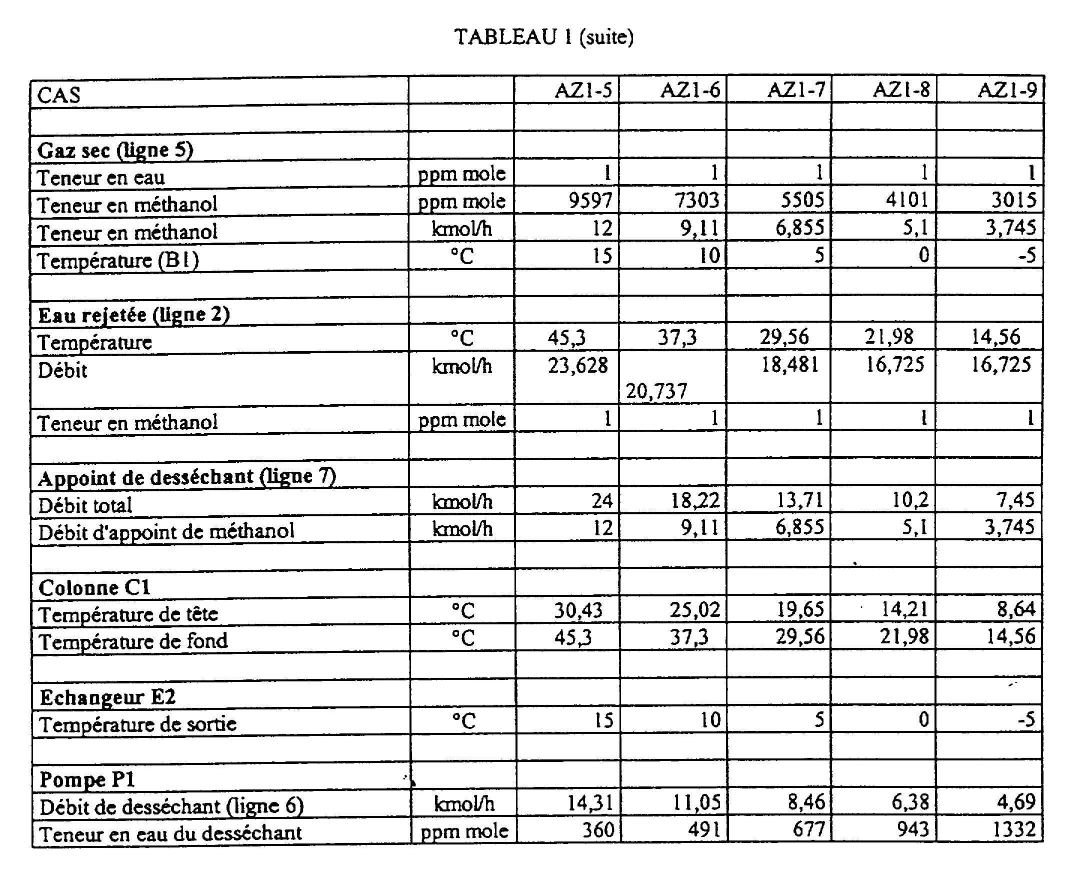

**TABLEAU 2**

| CAS | | MG1-1 | MG1-2 | MG1-3 | MG1-4 | MG1-5 |
|---|---|---|---|---|---|---|
| **Gaz à sécher (ligne 1)** | | | | | | |
| Température | °C | 50 | 50 | 50 | 50 | 50 |
| Pression | bar abs | 40 | 40 | 40 | 40 | 40 |
| Teneur en méthane | % mole | 99,5958 | 99,4961 | 99,3964 | 99,2967 | 99,1970 |
| Teneur en hexane | % mole | 0,0997 | 0,1994 | 0,2991 | 0,3988 | 0,4985 |
| Teneur en eau | % mole | 0,3045 | 0,3045 | 0,3045 | 0,3045 | 0,3045 |
| Débit | kmol/h | 1250 | 1250 | 1250 | 1250 | 1250 |
| **Gaz sec (ligne 5)** | | | | | | |
| Teneur en eau | ppm mole | 1 | 1 | 1 | 1 | 1 |
| Teneur en méthanol | % mole | 0,3558 | 0,3533 | 0,3515 | 0,3500 | 0,3494 |
| Teneur en méthanol | kmol/h | 4,45 | 4,418 | 4,396 | 4,377 | 4,37 |
| Température | °C | 10 | 10 | 10 | 10 | 10 |
| Pression | bar abs | 40 | 40 | 40 | 40 | 40 |
| **Eau rejetée (ligne 2)** | | | | | | |
| Température | °C | 40,87 | 41,34 | 42,44 | 44,61 | 49,59 |
| Débit | kmol/h | 8,267 | 8,235 | 8,213 | 8,194 | 8,186 |
| Teneur en méthanol | ppm mole | 1 | 1 | 1 | 1 | 1 |
| **Appoint de desséchant (ligne 7)** | | | | | | |
| Teneur en eau | % mole | 50 | 50 | 50 | 50 | 50 |
| Débit total | kmol/h | 8,9 | 8,836 | 8,792 | 8,754 | 8,74 |
| Débit d'appoint de méthanol | kmol/h | 4,45 | 4,418 | 4,396 | 4,377 | 4,37 |
| **Colonne C1** | | | | | | |
| Température de tête | °C | 33,79 | 34,13 | 34,92 | 36,47 | 39,89 |
| Température de fond | °C | 40,87 | 41,34 | 42,44 | 44,61 | 49,59 |
| **Echangeur E2** | | | | | | |
| Température de sortie | °C | 10 | 10 | 10 | 10 | 10 |
| **Pompe P1** | | | | | | |
| Débit de desséchant | kmol/h | 9,34 | 9,73 | 10,46 | 11,88 | 15,30 |
| Teneur en hexane du désséchant | % mole | 1,64 | 3,59 | 6,01 | 9,25 | 14,35 |
| Teneur en eau du desséchant | ppm mole | 1408 | 1222 | 1022 | 804 | 551 |

**TABLEAU 3**

| CAS | | AZ1-6 | AZ2-1 | AZ2-2 |
|---|---|---|---|---|
| | | | | |
| **Gaz à sécher (ligne 1)** | | Azote | Azote | Azote |
| Température | °C | 50 | 50 | 50 |
| Pression | bar abs | 12,5 | 12,5 | 12,5 |
| Teneur en eau | ppm mole | 9298 | 9298 | 9298 |
| Débit | kmol/h | 1250 | 1250 | 1250 |
| | | | | |
| **Gaz sec (ligne 5)** | | | | |
| Teneur en eau | ppm mole | 1 | 0,6 | 3 |
| Teneur en méthanol | ppm mole | 7303 | 7306 | 7306 |
| Teneur en méthanol | kmol/h | 9,11 | 9,114 | 9,114 |
| Température (B1) | °C | 10 | 10 | 10 |
| Pression | bar abs | 12,5 | 12,5 | 12,5 |
| | | | | |
| **Gaz sec épuré (ligne 9)** | | | | |
| Teneur en eau | ppm mole | 1 | 0,01 | 0,06 |
| Teneur en méthanol | ppm mole | 7303 | 351 | 351 |
| Teneur en méthanol | kmol/h | 9,11 | 0,435 | 0,435 |
| Température | °C | 10 | -35 | -35 |
| Pression | bar abs | 12,5 | 12,5 | 12,5 |
| | | | | |
| **Eau rejetée (ligne 2)** | | | | |
| Température | °C | 37,3 | 35 | 35 |
| Débit | kmol/h | 20,737 | 12,061 | 12,064 |
| Teneur en méthanol | ppm mole | 1 | 1 | 1 |
| | | | | |
| **Appoint de desséchant (ligne 7)** | | | | |
| Teneur en eau | % mole | 50 | 50 | 50a |
| Débit total | kmol/h | 18,22 | 0,87 | 0,876 |
| Débit d'appoint de méthanol | kmol/h | 9,11 | 0,435 | 0,438 |
| | | | | |
| **Colonne C1** | | | | |
| Zone de séchage (G2) : | | | | |
| Nombre d'étages théoriques | | 20 | 5 | 3 |
| Température de tête | °C | 25,02 | 22,91 | 22,94 |
| Zone d'élimination du desséchant (G1): | | | | |
| Nombre d'étages théoriques | | 10 | 10 | 10 |
| Température de fond | °C | 37,3 | 35 | 35 |
| | | | | |
| **Echangeur E2** | | | | |
| Température de sortie | °C | 10 | 10 | 10 |
| | | | | |
| **Pompe P1** | | | | |
| Débit de desséchant | kmol/h | 11,05 | 17,72 | 17,69 |
| Teneur en eau du desséchant | ppm mole | 491 | 169 | 1175 |

## Revendications

1. Procédé de séchage d'un gaz humide comprenant les étapes suivantes :
**a.** introduction d'un courant (1) dudit gaz humide à sécher à la base d'une zone de contact allongée, verticale (C1), et mise en contact à contre-courant dans ladite zone d'un courant ascendant dudit gaz humide avec un courant descendant de liquide (6,7) renfermant de l'eau et du solvant organique miscible à l'eau,
**b.** décharge en fond de la zone de contact d'un courant de liquide (2) enrichi en eau et appauvri en ledit solvant organique,
**c.** décharge en tête de la zone de contact d'un courant de gaz séché (3) enrichi en vapeur dudit solvant organique,
**d.** refroidissement (E2) du courant de gaz séché (3) de l'étape (c) pour condenser une phase liquide et séparation (B1) de ladite phase liquide condensée (6) dudit gaz séché (5) et
**e.** fourniture au procédé d'un courant de liquide d'appoint (7) renfermant de l'eau et ledit solvant organique, ce dernier en quantité au moins égale à celle du solvant organique perdu dans les courants déchargés du gaz séché (5) de l'étape (d) et du liquide de fond (2) de l'étape (b),
le procédé étant caractérisé en ce que la zone de contact de l'étape (a) est une zone de contact et de distillation fractionnée, en ce que l'on opère dans des conditions de distillation fractionnée des constituants du courant descendant de liquide, en ce que (f) l'on renvoie (6) de la phase condensée, séparée du gaz séché (5) de l'étape (d) à la tête de la zone de contact (C1) de l'étape (a) pour constituer une partie au moins dudit courant descendant de liquide, et en ce que (g) l'on introduit le courant de liquide d'appoint (7) dans une zone intermédiaire de la zone de contact et de distillation fractionnée, allongée, verticale (C1), de l'étape (a), ladite zone intermédiaire séparant ladite zone de contact et de distillation fractionnée (C1) en une première zone de contact et de distillation fractionnée (G1) située dans la partie inférieure de la zone de contact et de distillation fractionnée de l'étape (a) entre la zone d'introduction du courant de gaz humide (1) et ladite zone intermédiaire et une seconde zone de contact et de distillation fractionnée (G2) située dans la partie supérieure de la zone de contact et de distillation fractionnée de l'étape (a) entre ladite zone intermédiaire et la zone de renvoi à l'étape (a) de la phase liquide condensée (6) de l'étape (f), le solvant organique miscible à l'eau étant un solvant plus volatil que l'eau dans les conditions du procédé et qui ne forme pas d'azéotrope avec l'eau.

2. Procédé selon la revendication 1, caractérisé en ce que le solvant organique est le méthanol.

3. Procédé selon la revendication 1 ou 2, caractérisé en ce que le liquide d'appoint est constitué de 0,01 à 90 parties en mole d'eau pour 99,99 à 10 parties en mole de solvant organique.

4. Procédé selon la revendication 1 ou 2, caractérisé en ce que le liquide d'appoint est constitué de 10 à 70 parties en mole d'eau pour 90 à 30 parties en mole de solvant organique.

5. Procédé selon l'une des revendications 1 à 4, caractérisé en ce que chacune des première et seconde zones de contact et de distillation fractionnée (G1, G2) possède une efficacité correspondant à au moins deux plateaux théoriques.

6. Procédé selon l'une des revendications 1 à 5, caractérisé en ce que chacune des première et seconde zones de contact et de distillation fractionnée (G1, G2) possède une efficacité correspondant à au moins cinq plateaux théoriques.

7. Procédé selon l'une des revendications 1 à 6, caractérisé en ce que la phase condensée (6) renvoyée à la tête de la zone de contact et de distillation fractionnée de l'étape (a) renferme de 50 à 2000 ppm en mole d'eau, le complément étant le solvant organique.

8. Procédé selon l'une des revendications 1 à 7 caractérisé en ce que le gaz humide à sécher (1) est constitué d'un ou plusieurs hydrocarbures en C1 à C6.

9. Procédé selon l'une des revendications 1 à 8, caractérisé en ce que le courant de liquide (2) déchargé à l'étape (b) a une teneur en solvant organique inférieure à 100 ppm mole.

10. Procédé selon l'une des revendications 1 à 8, caractérisé en ce que le courant de liquide (2) déchargé à l'étape (b) a une teneur en solvant organique inférieure à 10 ppm mole.

## Patentansprüche

1. Trocknungsverfahren für ein Feuchtgas, umfassend folgende Stufen:
a. Einführung eines Stroms (1) besagten zu trocknenden Feuchtgases an der Basis einer vertikalen, länglichen Kontaktzone (C1), und Kontakt im Gegenstrom in besagter Zone eines aufsteigenden Stroms besagten Feuchtgases mit einem absteigenden Flüssigkeitsstrom (6,7), der Wasser und organisches, mit Wasser mischbares Lösungsmittel umfaßt.
b. Entladung auf dem Grund der Kontaktzone eines Flüssigkeitsstromes (2), der mit Wasser angereichert und mit besagtem organischen Lösungsmittel abgereichert ist.
c. Entladung zu Beginn der Kontaktzone eines Stromes getrockneten Gases (3), der mit Dampf besagten organischen Lösungsmittels angereichert ist.
d. Abkühlen (E2) des Stromes getrockneten Gases (3) der Stufe (c) zur Kondensierung einer Feuchtphase und Trennung (B1) besagter, mit besagtem getrockneten Gas (5) kondensierter (6) Feuchtphase und
e. Zulieferung an das Verfahren eines Stroms Zusatzflüssigkeit (7), die Wasser und besagtes organisches Lösungsmittel umschließt, letzteres wenigstens in gleicher Menge wie die des organischen Lösungsmittels, das in den entladenen Strömen des getrockneten Gases (5) der Stufe (d) und der Grundflüssigkeit (2) der Stufe (b) verloren wurde,
wobei das Verfahren dadurch gekennzeichnet ist, daß die Kontaktzone der Stufe (a) eine Kontaktzone und eine Zone der fraktionierten Destillation ist, daß man unter Bedingungen fraktionierter Destillation der Bestandteile des absteigenden Stromes der Feuchtigkeit arbeitet, daß (f) man von der kondensierten Phase, getrennt von dem getrockneten Gas (5) der Stufe (d) zu Beginn der Kontaktzone (C1) von der Stufe (a) zurückverweist (6), um wenigstens einen Teil besagten absteigenden Strom der Flüssigkeit zu bilden, und daß (g) man den Strom der Zusatzflüssigkeit (7) in eine Zwischenzone zwischen der Kontaktzone und besagter vertikalen, länglichen, fraktionierten Destillation (C1) der Stufe (a) einführt, wobei besagte Zwischenzone besagte Kontaktzone und der fraktionierten Destillation (C1) in eine erste Kontaktzone und fraktionierte Destillation (G1) teilt, die sich im unteren Teil der Kontaktzone und der fraktionierten Destillation der Stufe (a) zwischen der Einführungszone des Feuchtgasstroms (1) und besagter Zwischenzone und einer zweiten Kontaktzone und der fraktionierten Destillation (G2) befindet, die sich im oberen Teil der Kontaktzone und der fraktionierten Destillation der Stufe (a) zwischen besagter Zwischenzone und der Rückverweiszone zur Stufe (a) der kondensierten Flüssigkeitsphase (6) der Stufe (f) befindet, wobei das organische, mit Wasser vermischbare Lösungsmittel ein Lösungsmittel ist, das flüchtiger ist als Wasser in den Verfahrensbedingungen und das mit Wasser kein Azeotrop bildet.

2. Verfahren gemäß Anspruch 1, dadurch gekennzeichnet, daß das organische Lösungsmittel Methanol ist.

3. Verfahren gemäß Anspruch 1 oder 2, dadurch gekennzeichnet, daß die Zusatzflüssigkeit aus 0,01 bis 90 Teilen in Mol aus Wasser bei 99,99 bis 10 Teilen in Mol aus organischem Lösungsmittel gebildet wird.

4. Verfahren gemäß Anspruch 1 oder 2, dadurch gekennzeichnet, daß die Zusatzflüssigkeit aus 10 bis 70 Teilen in Mol aus Wasser bei 90 bis 30 Teilen in Mol aus organischem Lösungsmittel gebildet wird.

5. Verfahren gemäß Anspruch 1 bis 4, dadurch gekennzeichnet, daß jede der ersten und zweiten Kontaktzonen und fraktionierten Destillationen (G1, G2) eine wenigstens zwei theoretischen Böden entsprechende Leistungsfähigkeit besitzt.

6. Verfahren gemäß Anspruch 1 bis 5, dadurch gekennzeichnet, daß jede der ersten und zweiten Kontaktzonen und fraktionierter Destillation (G1, G2) eine wenigstens fünf theoretischen Böden entsprechende Leistungsfähigkeit besitzt.

7. Verfahren gemäß Anspruch 1 bis 6, dadurch gekennzeichnet, daß die zu Beginn der Kontaktzone und der fraktionierten Destillation der Stufe (a) zurückverwiesene kondensierte Phase (6) 50 bis 2000 ppm in Mol aus Wasser umschließt, wobei die Ergänzung das organische Lösungsmittel ist.

8. Verfahren gemäß Anspruch 1 bis 7, dadurch gekennzeichnet, daß das zu trocknende Feuchtgas (1) aus einem oder mehreren Kohlenwasserstoffen in C1 bis C6 gebildet wird.

9. Verfahren gemäß Anspruch 1 bis 8, dadurch gekennzeichnet, daß der Strom der in der Stufe (b) entladenen Flüssigkeit (2) einen Gehalt an organischem Lösungsmittel unter 100 ppm Mol hat.

10. Verfahren gemäß Anspruch 1 bis 8, dadurch gekennzeichnet, daß der Strom der in der Stufe (b) entladenen Flüssigkeit (2) einen Gehalt an organischem Lösungsmittel unter 10 ppm Mol hat.

## Claims

1. A process for drying a wet gas comprising the following steps :
a. introducing a stream (1) of said wet gas to be dried at the bottom of a vertical lengthened contact zone (C1), and counter-currently contacting said wet gas in said zone with an upward stream of liquid (6, 7) that contains water and a water mixable organic solvent,
b. discharging at bottom of the contact zone a stream of liquid (2) that is enriched in water and depleted in said organic solvent,
c. discharging at top of the contact zone a stream of dried gas (3) that is enriched in vapour of said organic solvent,
d. cooling (E2) the stream of dried gas (3) from the step (c) for condensing a liquid phase and separating (B1) said condensed liquid phase (6) from said dried gas (5) and
e. furnishing to the process a stream of surplus liquid (7) that contains water and said organic solvent, the latter in an amount at least equal to that of the organic solvent which has been lost in the discharged streams of dried gas (5) of.step (d) and the bottom liquid (2) of step (b),
the process being characterized in that the contact zone of step (a) is a contact and fractional distillation zone, in that there is operated in the fractional distillation conditions of the components of the downward current of liquid , in that (f) the condensated phase, separated from the dried gas (5) of step (d) is returned to top of the contact zone (C1) of step (a) for constituting at least one part of said downward stream of liquid, and in that (g) the stream of surplus liquid (7) is introduced in an intermediate zone of the vertical, lengthened, contact and fractional distillation zone (C1), of step (a), said intermediate zone separating said contact and fractional distillation zone (C1) into a first contact and fractional distillation zone (G1) situated in the lower part of the contact and fractional distillation zone of step (a) between the introduction zone of the stream of wet gas (1) and said intermediate zone and a second contact and fractional distillation zone (G2) situated in the upper part of the contact and fractional distillation zone or step (a) between said intermediate zone and the zone for returning at step (a) the condensed liquid phase (6) of step (f), the water mixable organic solvent being a solvent which is more volatile than water in the conditions of the process and which does not form an azeotrope with water.

2. Process according to claim 1, characterized in that the organic solvent is methanol.

3. Process according to claim 1 or 2, characterized in that the surplus liquid is constituted by 0.01 to 90 molar parts of water for 99.99 to 10 molar parts of organic solvent.

4. Process according to claim 1 or 2, characterized in that the surplus liquid is constituted by 10 to 70 molar parts of water for 90 to 30 molar parts of organic solvent.

5. Process according to one of claims 1 to 4, characterized in that each one of the first and second contact and fractional distillation zones (G1, G2) has an effectiveness which corresponds to at least two theorical plates.

6. Process according to one of claims 1 to 5, characterized in that each one of the first and second contact and fractional distillation zones (G1, G2) has an effectiveness which corresponds to at least five theorical plates.

7. Process according to one of claims 1 to 6, characterized in that the condensed phase (6) that is returned to top of the contact and fractional distillation zone of step (a) contains 50 to 2000 molar ppm of water, the balance being the organic solvent.

8. Process according to one of claims 1 to 7, characterized in that the wet gas to be dried (1) is constituted by one or a plurality of C1-C6 hydrocarbons.

9. Process according to one of claims 1 to 78, characterized in that the stream of liquid (2) which is discharged at step (b) has an amount in organic solvent that is lower than 100 molar ppm.

10. Process according to one of claims 1 to 8, characterized in that the stream of liquid (2) which is discharged at step (b) has an amount in organic solvent that is lower than 10 molar ppm.
